# FASCICULE DE BREVET EUROPEEN

(11) **EP 0 479 676 B1**
(45) Date de publication et mention de la délivrance du brevet: **18.12.1996**
(21) Numéro de dépôt: 91402632.3
(22) Date de dépôt: 03.10.1991
(51) Int. Cl.: G01F 1/712

(54) **Mesure du débit d'un filet de matériau fondu**
Durchflussmessung eines Stroms von Schmelzgut
Flow measurement of a stream of molten material

(30) Priorité: 04.10.1990 FR 9012227
(43) Date de publication de la demande: 08.04.1992
(73) Titulaire: ISOVER SAINT-GOBAIN, F-92400 Courbevoie (FR)
(72) Inventeur: Maillard, Alain, F-95230 Soisy Sous Montmorency (FR); Peyre, Jean, F-92380 Garches (FR)
(74) Mandataire: Le Vaguerese, Sylvain Jacques

(56) Documents cités:
- EP-A- 0 100 304
- CH-A- 572 623
- GB-A- 2 091 418

## Description

L'invention est relative à l'amélioration de techniques de mesure de débit d'un filet de matériaux fondus tels que du verre, des basaltes, des laitiers, des céramiques et analogues, matériaux qui, à l'état fondu, sont le siège d'une émission de rayonnement important.

Il est connu de procéder à la mesure de ces débits par des moyens décrits, notamment, dans le brevet SE 82 03650. Selon ce document, le principe de mesure est le suivant. Deux détecteurs, sensibles aux radiations émises, sont disposés sur le trajet suivi par le matériau fondu à distance l'un de l'autre. L'émission du matériau fondu présente des irrégularités. Les détecteurs sont disposés de manière à recevoir l'émission d'une portion limitée de la section du filet examiné. Les signaux reçus sont sélectionnés pour ne conserver que ceux dépassant un certain seuil. La technique antérieure consiste à mesurer le temps séparant l'apparition de signaux dépassant le seuil sur chacun des détecteurs, cette mesure traduisant la vitesse d'écoulement du matériau. Une mesure de diamètre du filet complète la détermination permettant d'atteindre le débit. La mesure de diamètre est conduite en formant l'image de la section du filet sur une caméra linéaire, le nombre d'éléments sensibles recevant une radiation suffisante, correspondant à la largeur du filet observé.

Les dispositions prévues dans la technique antérieure répondent, de façon imparfaite, aux buts poursuivis. En pratique, les mesures de débit sont principalement utilisées comme moyens alimentant une bouche de régulation. Les mesures sont comparées à des valeurs de consigne choisies par l'opérateur et tout écart par rapport à ces consignes déclenche un ajustement de paramètre comme l'alimentation électrique et, par suite, la température de la filière à partir de laquelle le matériau s'écoule librement. En d'autres termes, la mesure de débit dans ce type d'application doit être effectuée avec précision en permanence, faute de quoi le système serait complètement désorganisé.

Il est bien entendu possible de prévenir l'effet de mesures aberrantes sur la régulation en excluant toute mesure qui s'écarterait d'une plage de variations "vraisemblables" définie de manière expérimentale. Ceci n'est pas entièrement satisfaisant. Il en résulte une perte systématique de l'information utilisée pour cette régulation.

La présence de mesures aberrantes est inhérente au système choisi antérieurement qui est basé sur la reconnaissance consécutive par les deux détecteurs de deux signaux dépassant un certain seuil. Dans un tel système, l'identification des signaux ne peut être parfaite. Le système est pris en défaut dans différents cas, même si d'autres "sécurités" en particulier sur le temps devant séparer deux signaux, permet d'écarter certains risques d'erreurs.

La présente invention a pour but d'améliorer les techniques mises en oeuvre pour la mesure des débits de matériau fondu du type de ceux indiqués précédemment, notamment en minimisant, et pratiquement en éliminant les risques d'erreurs dans l'identification des signaux servant à déterminer la vitesse d'écoulement.

L'invention concerne un procédé de mesure du débit d'un filet de matériau émettant un rayonnement comprenant une mesure du diamètre du filet et une mesure de vitesse, la mesure de vitesse étant établie à partir de la mesure du temps séparant l'apparition successive en deux points distants l'un de l'autre sur le trajet du filet d'irrégularités identifiables d'émission. Un tel procédé est connu du document GB-A-2 091 418.

Ce procédé est caractérisé en ce que la mesure de l'intervalle de temps met en oeuvre la détermination d'une séquence d'émission en un premier point du trajet du matériau fondu, la détermination d'une séquence d'émission en un second point du trajet, le traitement de ces informations permettant d'établir une corrélation entre les séquences et l'intervalle de temps correspondant au passage des mêmes irrégularités aux deux points choisis et identifiés par cette corrélation.

Selon l'invention et comme précédemment, la mesure de l'écoulement est basée sur les variations de rayonnement du filet de matériau fondu, variations qui sont suivies au moyen de deux détecteurs disposés le long du trajet de l'écoulement. Les difficultés observées précédemment sont écartées en ne se reportant pas à des "pics" correspondant aux irrégularités d'une certaine ampleur - ce qui constitue, par ailleurs, une limite d'utilisation si le filet observé ne présente pas ou pas suffisamment d'irrégularités - mais en comparant l'ensemble des signaux reçus par les deux détecteurs successifs. Selon l'invention il s'agit, en quelque sorte, non plus de comparer un pic instantané mais toute une séquence correspondant à un certain laps de temps d'écoulement. La comparaison des signaux des deux détecteurs permet d'établir quelles sont les séquences les plus semblables ou les mieux corrélées et, cette identification faite, d'en déduire le temps écoulé entre les deux détections.

L'expérience montre que, même en tenant compte des modifications inévitables de la physionomie des séquences d'émission dans le temps, une corrélation pratiquement certaine pouvait être établie par ce moyen évitant ainsi toute mesure défectueuse.

Simultanément, le mode de détection utilisé selon l'invention a été amélioré. Nous avons vu précédemment qu'une partie seulement de la section du filet de matériau fondu était utilisée comme source d'émission. Une raison de ce choix était liée à la nécessité de minimiser les causes de variation du rayonnement observé et, par suite, des signaux analysés. En centrant l'observation dans la partie médiane, les risques de variations importantes qui se manifestent sur les bords par rapport à l'environnement sont écartés. Cette sélection se traduit néanmoins encore par un appauvrissement des informations disponibles.

A l'inverse, selon l'invention, il est possible et même préférable de traiter un signal aussi "riche" que possible. Plus le signal est complexe, plus la corrélation est sûre. Pour cette raison, on utilise avantageusement des capteurs permettant de recevoir le rayonnement émis par une 5 section complète du filet de matériau fondu.

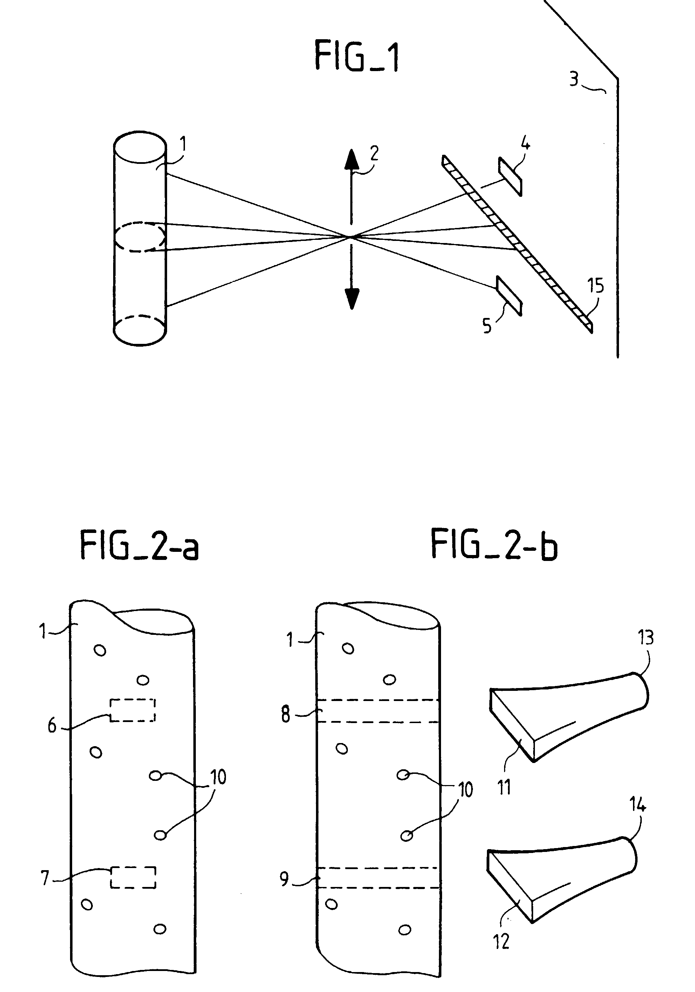

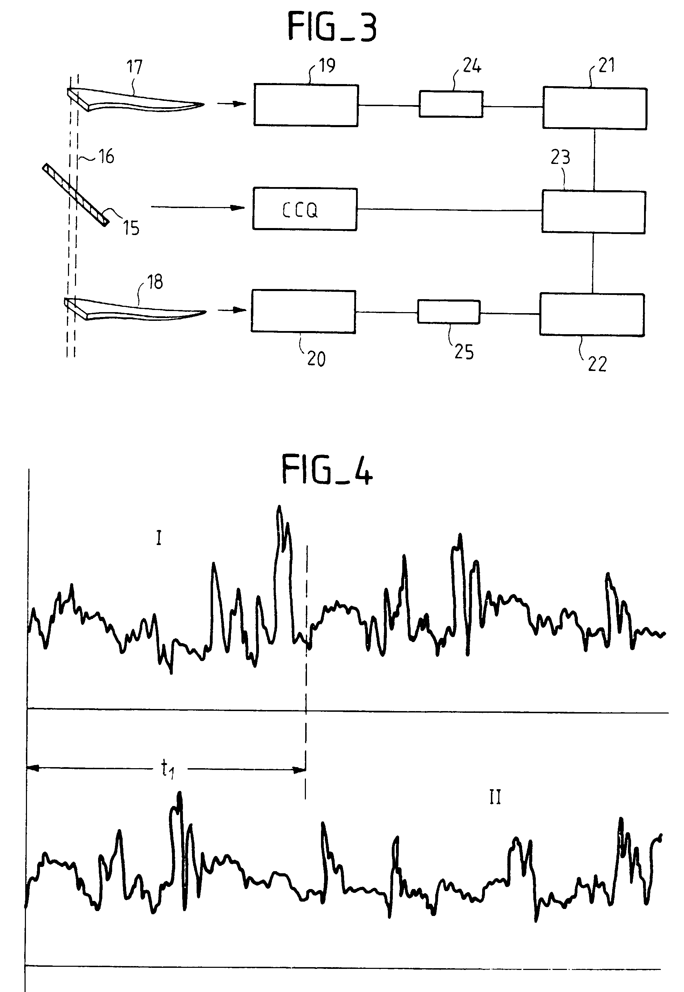

La suite de la description présente l'invention, de façon plus détaillée, en faisant référence aux planches de dessins dans lesquelles :
■ **la figure 1** est un schéma de principe de la technique mise en oeuvre,
■ **les figures 2a et 2b** représentent respectivement, de façon schématique, les parties du filet de matériau observé selon l'art antérieur et selon l'invention,
■ **la figure 3** est un schéma de principe de l'ensemble de mesure,
■ **la figure 4** est un schéma représentant la comparaison des signaux provenant des moyens de détection des irrégularités d'émission.

A la figure 1, le filet de matériau fondu est représenté par le segment cylindre 1. Un tel écoulement se trouve dans de nombreuses applications, notamment de l'industrie verrière et céramique. A titre d'exemple, les divers modes de transformation aboutissant à la production de fibres minérales d'isolation comportent un tel écoulement entre la zone de fusion et celle de transformation proprement dite, qu'il s'agisse d'une technique de centrifugation au moyen d'un rotor faisant, en même temps, office de filière ou qu'il s'agisse d'une centrifugation dite externe à partir de la périphérie d'une série de roues.

Dans ces exemples évoqués précédemment, le matériau fondu, verre, basalte, laitier... s'écoule librement sur une certaine distance sous forme d'un filet de section cylindrique. Il se trouve à une température élevée et est la source d'un rayonnement intense. Toujours dans le cas de ces exemples, le filet de matériau fondu comporte un nombre relativement important d'inhomogénéités constituées, de façon presque exclusive, par des bulles gazeuses. D'autres inhomogénéités peuvent provenir de particules infondues ou insuffisamment fondues. Dans tous les cas, ces inhomogénéités introduisent dans le rayonnement des variations qui peuvent être détectées.

Le rayonnement émis par le filet de matériau fondu 1 est passé dans un système optique représenté symboliquement en 2. Dans le plan image 3, se situent les détecteurs qui servent à la mesure du débit. Ces détecteurs sont, respectivement :
■ deux photodétecteurs 4 et 5 qui servent à l'analyse du rayonnement émis à partir de deux zones espacées sur le filet 1,
■ un système de détection de type caméra linéaire, dite "CCD" ( "Charged Coupled Device" ) 15.

Les figures 2a et 2b montrent, de manière comparative, les observations du filet 1 de matériau fondu dans les modes antérieurs et, de façon préférée, selon l'invention.

Dans chacun des deux modes les zones observées, respectivement 6 et 7, 8 et 9, sont espacées le long du trajet du filet. Les défauts, générateurs d'inhomogénéités, sont représentés par des bulles 10.

Les défauts 10 se distribuent de manière aléatoire dans le filet. Cette particularité explique déjà une difficulté qui accentue l'incertitude des techniques antérieures. Sur la figure 2a, on comprend qu'une partie des défauts ne soit pas détectée car n'entrant pas dans les zones observées 6 et 7. La richesse des signaux en est donc diminuée. Il est encore plus gênant que certains défauts, situés à la limite des zones observées, puissent être perçus au passage de l'une des zones et pas dans l'autre, simplement par le fait d'une variation, même minime, dans la position relative du filet ou du défaut dans ce filet.

Selon l'invention, pour les raisons indiquées ci-dessus, on préfère, comme représenté à la figure 2b, observer des sections complètes du filet. Dans la pratique, pour les filet d'alimentation des installations de production de fibres d'isolation, la section est de l'ordre de 0,5 à 3 cm et l'observation de la totalité de la section ne soulève pas de difficulté particulière. Cependant, il est commode de modifier l'image analysée par le détecteur qui n'est pas généralement de forme oblongue. Ce mode de transformation est avantageusement réalisé en utilisant un guide d'onde optique constitué d'un faisceau de fibres, faisceau qui, à l'extrémité tournée vers le filet, présente une section très allongée 11, 12 et, à l'extrémité tournée vers le détecteur photosensible, une section circulaire 13, 14.

En dehors de l'analyse d'une section de forme géométrique, mieux adaptée aux exigences de la mesure considérée, l'utilisation d'un guide d'onde optique présente également l'avantage de permettre de placer les photodétecteurs à une certaine distance des zones exposées de l'installation de production des fibres. Même en prenant certaines précautions, il est en effet difficile d'éviter une élévation de température du dispositif lorsqu'il est placé à proximité des moyens de distribution de matériau fondu dans les installations industrielles. Il est donc avantageux de pouvoir mettre les instruments fragiles à une certaine distance. L'éloignement de la partie "électronique" du dispositif de mesure est aussi avantageux quand l'installation de production comprend des moyens de chauffage par induction qui génèrent de puissants parasites. Un autre avantage de l'utilisation des guides d'ondes est, le cas échéant, de procéder à l'analyse de sections du filet localisées dans des endroits dont l'encombrement ne permettrait pas l'installation de détecteurs à proximité immédiate.

A la figure 1, on a encore représenté le système de mesure du diamètre du filet. Comme indiqué, on utilise avantageusement une caméra linéaire 15 comportant un grand nombre de cellules sensibles ou tout dispositif analogue. La précision de la mesure dépend, à l'évidence, de la capacité de résolution de la caméra et donc du nombre des cellules alignées.

L'ensemble de traitement de l'information est représenté, schématiquement, à la figure 3.

A gauche de la figure, sont représentés l'image 16 du filet, la caméra 15 et les deux guides d'ondes 17 et 18.

Les rayonnements reçus par ces guides d'ondes sont conduits à des photodiodes 19, 20. Les signaux sont ensuite amplifiés et conduits, après passage dans un convertisseur analogique-numérique 21, 22, à une unité centrale de calcul 23. Des filtres 24, 25 peuvent être introduits de manière usuelle pour éliminer les fréquences parasites.

La mesure de diamètre est faite à partir de la caméra linéaire 15, le signal est également converti et envoyé à l'unité centrale 23.

La figure 4 montre le type de signaux analogiques correspondant à une mesure. Les deux diagrammes distincts I et II proviennent des deux photodiodes. Dans ce schéma, on constate à des modifications limitées une identité des profils enregistrés si l'on décale la courbe II par rapport à la courbe I d'un intervalle correspondant au temps séparant le passage devant les deux détecteurs situés l'un en-dessous de l'autre.

La principale corrélation correspond à la détermination automatique de l'intervalle de temps séparant deux séquences analogues observées par les deux détecteurs. La connaissance de ce temps, associée à celle de la distance séparant les deux zones observées, permet d'établir la vitesse d'écoulement du filet de matériau fondu.

La détermination du diamètre de l'écoulement doit tenir compte doit tenir compte des variations de luminance du matériau en fusion. La largeur du signal issu de la caméra dépend de la luminance. Si l'on fixe un seuil caractéristique d'un pixel "éclairé", des filets de même diamètre et de luminances différentes paraîtront avoir des diamètres différents.

Pour éviter cette erreur systématique, on s'efforce de travailler à amplitude de signal constante. Ceci est obtenu, selon l'invention, en asservissant le temps d'exposition de la caméra à la luminance moyenne de filet. Cet asservissement se fait au moyen du logiciel de gestion de la caméra. L'algorithme utilisé permet d'obtenir un signal dont l'amplitude se situe juste en-dessous du niveau de sortie maximum de la caméra et de profiter de toute sa dynamique. L'amplitude du signal peut varier du fait de la progression du temps d'exposition pas à pas. La qualité de la mesure est également améliorée en asservissant la valeur du seuil servant à mesurer la largeur du signal à l'amplitude maximale de celui-ci. La mesure s'effectue à mi-hauteur du signal.

En dehors de la précision de la mesure liée à la luminance, il faut aussi faire en sorte que des écarts de position du filet ou de son image face à la caméra ne perturbent pas la mesure. Pour tenir compte des changement latéraux d'ampleur limitée, le détecteur doit présenter une dimension suffisante. Dans la pratique, pour les utilisations dans les machines de production de fibres minérales, on choisit, par exemple, de faire en sorte que l'image du filet ne recouvre pas plus de 60 % de la largeur du détecteur. Néanmoins, pour un détecteur donné, il est préférable que l'image mesurée représente une part importante de la largeur sensible pour maintenir une résolution satisfaisante et, par suite, une bonne précision.

Les essais de ces techniques de mesure ont été réalisés dans des installations de production de fibres d'isolation. Deux séries d'essais ont été effectuées : la première sur une installation de production de laine de verre, la seconde sur une installation de laine de roche (basalte ou laitier de hauts-fourneaux).

Dans la production de laine de verre, le matériau fondu provient d'un four de fusion fonctionnant en continu. Le matériau, après acheminement par un avant-corps, est délivré par une filière réglable en température (et, par suite, en débit) à l'appareil de centrifugation. Dans une installation de ce type, le verre fondu présente un spectre d'émission généralement très riche par suite d'un affinage limité entraînant la présence d'une quantité importante de bulles.

Sur des essais conduits avec un débit variant entre 10 et 30 tonnes par jour, soit de 400 à 12000 kg/h, la précision atteinte selon l'invention est de l'ordre de 0,3 % ou moins dans la configuration indiquée précédemment.

Il faut souligner que, dans cette détermination, la précision relative sur les mesures de vitesse d'écoulement et de diamètre du filet sont du même ordre de grandeur. Par ailleurs, un gain supplémentaire de précision dans la mesure serait de conséquence limitée sur les capacités de régulation de l'installation.

Dans l'installation, les sections visées pour la mesure de vitesses sont distantes de 50 mm et la vitesse du filet est de l'ordre de 2 m/s. Le temps d'acquisition entre chaque mesure est de l'ordre de quelques secondes, mais peut être abaissé si cela est nécessaire. L'expérience montre cependant, qu'en régime stationnaire, les variations de débit sont très lentes et qu'une mesure plus rapide n'aurait pas d'incidence sur les capacités de régulation compte tenu de l'inertie thermique du système.

Dans les essais conduits, le temps complet correspondant à un échantillonnage était d'environ 2 secondes. La moyenne est effectuée dans ce temps sur une dizaine de mesures réduisant encore le risque d'erreur.

La mesure de diamètre est faite à partir d'une caméra linéaire comprenant 1728 pixels pour des diamètres d'image du filet quine dépassent pas, ordinairement, 10 mm permettant une mesure de diamètre avec une précision de l'ordre de 1 micromètre en moyennant les mesures successives. La précision peut, bien entendu, être accrue en augmentant le nombre de pixels de la caméra. En pratique, cependant, ceci n'est pas nécessaire lorsque l'on moyenne les mesures et ceci d'autant plus que la rapidité d'acquisition permet un nombre très important de mesures dans un intervalle très court (de l'ordre d'une centaine par seconde). Par suite pour cette mesure également, l'intervalle de temps entre deux mesures successives est maintenu inférieur à 5 s.

Sur l'installation de production de laine de roche, la mesure s'effectue dans des conditions analogues. L'intérêt de cette mesure est d'autant plus marqué que le mode d'alimentation en matériau fondu est d'ordinaire beaucoup moins stable que dans le cas précédent, ceci en raison du fait que l'on utilise des "cubilots" pour fondre les matières premières.

Par ailleurs, une difficulté particulière des roches et laitiers fondus tient au fait que, contrairement au verre qui à la température de fusion reste semi-transparent, ces matériaux sont opaques. Autrement dit, si avec le verre on peut déceler les irrégularités d'émission en provenance de l'intérieur du filet qui s'écoule, ceci n'est pas possible dans le cas des roches et laitiers. La seule émission analysable est celle qui provient de la surface du filet. Pour cette raison encore, il est avantageux de procéder selon le mode proposé par l'invention consistant à analyser une section complète du filet de matériau.

Pour la mesure effectuée sur l'installation de production de laine de roche, la distance séparant les deux points de détection était réduite à environ 25 mm pour des raisons pratiques tenant à la géométrie de l'ensemble. La précision atteinte sur la vitesse d'écoulement (qui reste de l'ordre de 1 à 2 m/s) est néanmoins à peu près du même ordre que celle de la mesure effectuée sur le verre fondu.

En dépit d'une stabilité latérale du filet de matériau fondu très incertaine, le diamètre a pu être mesuré avec la même précision que précédemment dans le cas du verre. Globalement, le débit est obtenu avec une erreur relative qui ne dépasse pas 0,5 % pour des débits allant de 5 à 25 tonnes/jour.

## Revendications

1. Procédé de mesure du débit d'un filet de matériau émettant un rayonnement comprenant une mesure du diamètre du filet et une mesure de vitesse, la mesure de vitesse étant établie à partir de la mesure du temps séparant l'apparition successive en deux points distants l'un de l'autre sur le trajet du filet d'irrégularités identifiables d'émission, ce procédé étant caractérisé en ce que la mesure de l'intervalle de temps met en oeuvre la détermination d'une séquence d'émission en un premier point du trajet du matériau fondu, la détermination d'une séquence d'émission en un second point du trajet, le traitement de ces informations permettant d'établir une corrélation entre les séquences et l'intervalle de temps correspondant au passage des mêmes irrégularités aux deux points choisis et identifiés par cette corrélation.

2. Procédé selon la revendication 1 dans lequel dans la mesure de la vitesse d'écoulement du filet de matériau émissif les points observés sur le trajet de cet écoulement correspondent à des sections transversales complètes de ce filet.

3. Procédé selon la revendication 1 ou la revendication 2 dans lequel la mesure du diamètre du filet étant effectuée au moyen d'une caméra linéaire recevant l'image du filet, le fonctionnement de la caméra est commandé de manière à asservir le temps d'exposition séquencé, à la luminance moyenne du filet de matériau.

4. Procédé selon la revendication 3 dans lequel le seuil du signal servant à déterminer la largeur du filet est asservi à l'amplitude maximale du signal.

5. Dispositif pour la détermination du débit selon l'une des revendications précédentes comprenant deux photodétecteurs disposés de manière à recevoir l'émission du filet correspondant à deux points distincts sur le trajet d'écoulement du filet, un ensemble pour l'amplification du signal émis par chacun des photodétecteurs et un ensemble pour le traitement des signaux amplifiés et mesurant le temps séparant les apparitions de signaux identifiés par les photodétecteurs, dispositif comprenant également une caméra linéaire pour la détermination du diamètre du filet, des moyens de traitement des signaux émis par les photodétecteurs, moyens établissant des corrélations entre des séquences de signaux émis par les photodétecteurs et déterminant l'intervalle de temps séparant deux séquences corrélées.

6. Dispositif selon la revendication 5 dans lequel l'image du filet est conduite aux photodétecteurs au moyen de guides d'ondes optiques.

7. Dispositif selon la revendication 6 dans lequel les guides d'ondes optiques présentent, du côté de l'image du filet de matériau, une section allongée couvrant la totalité de la section droite du filet.

## Patentansprüche

1. Verfahren zur Messung des Durchsatzes eines Strahls von eine Strahlung emittierendem Material, welches eine Messung des Strahldurchmessers und eine Geschwindigkeitsmessung umfaßt, wobei die Geschwindigkeitsmessung ausgehend von der Messung derjenigen Zeit erstellt wird, welche zwischen dem aufeinanderfolgenden Auftreten identifizierbarer Emissionsschwankungen an zwei entfernt voneinander auf der Bahn des Strahls gelegenen Punkten liegt, und das Verfahren dadurch gekennzeichnet ist, daß die Messung des Zeitintervalles die Bestimmung einer Emissionssequenz an einem auf der Bahn des Schmelzematerials gelegenen ersten Punkt, die Bestimmung einer Emissionssequenz an einem auf dieser Bahn gelegenen zweiten Punkt, und die Verarbeitung dieser Informationen durchführt, wodurch es ermöglicht wird, einen Bezug zwischen den Sequenzen und demjenigen Zeitintervall herzustellen, welches dem Durchgang dieser Schwankungen an den beiden gewählten und durch diese Korrelation gekennzeichneten Punkten entspricht.

2. Verfahren nach Anspruch 1, bei dem bei der Messung der Fließgeschwindigkeit des Strahls von strahlungsabgebendem Material die auf der Bahn dieses Flusses beobachteten Punkte vollständigen Strahlquerschnitten entsprechen.

3. Verfahren nach Anspruch 1 oder 2, bei dem zur Messung des Strahldurchmessers das Bild des Strahls mit einer Linearkamera aufgenommen wird, deren Betrieb bezüglich der Zeit für die sequentiell erfolgende Belichtung in Abhängigkeit von der mittleren Strahlungsdichte des Materialstrahls gesteuert wird.

4. Verfahren nach Anspruch 3, bei dem der Schwellenwert des Signals, welches zur Bestimmung der Strahlbreite dient, von der maximalen Signalamplitude abhängig ist.

5. Vorrichtung zur Durchsatzbestimmung nach einem der vorhergehenden Ansprüche mit zwei Photodetektoren, die derart angeordnet sind, daß sie die Emission des Strahles aufnehmen, welche zwei unterschiedlichen Punkten in der Flußbahn des Strahls entspricht, einer Anordnung zum Verstärken des von jedem Photodetektor abgegebenen Signals, und einer Anordnung zum Verarbeiten der verstärkten Signale sowie zum Messen der Zeit, welche zwischen dem Auftreten von durch die Photodetektoren identifizierten Signalen liegt, wobei die Vorrichtung auch eine Linearkamera zum Bestimmen des Strahldurchmessers, Einrichtungen zum Verarbeiten der von den Photodetektoren abgegebenen Signale, Einrichtungen zum Herstellen der Korrelationen zwischen Sequenzen von den Photodetektoren ausgegebener Signale und zum Bestimmen des zwischen zwei korrelierten Sequenzen liegenden Zeitintervalls aufweist.

6. Vorrichtung nach Anspruch 5, bei der die Abbildung des Strahls mittels optischer Wellenleiter an die Photodetektoren geleitet wird.

7. Vorrichtung nach Anspruch 6, bei der die optischen Wellenleiter auf der Seite der Abbildung des Materialstrahls einen erweiterten Querschnitt aufweisen, welcher den gesamten rechtwinkligen Strahlquerschnitt abdeckt.

## Claims

1. Process for measuring the flow rate of a thin stream of material emitting radiation comprising a measurement of the diameter of the stream and a speed measurement, the speed being measured on the basis of the measurement of the time separating the successive appearance of identifiable emission irregularities at two points remote from one another over the path of the thin stream, this process being characterised in that the time interval measurement involves the determination of an emission sequence at a first point on the path of the molten material, the determination of an emission sequence at a second point on the path, the processing of this data permitting the establishment of a correlation between the sequences and of the time interval corresponding to the passage of the same irregularities at the two points selected and identified by this correlation.

2. Process according to Claim 1, in which, in the measurement of the speed of flow of the thin stream of emissive material, the points observed on the path of this flow correspond to complete cross-sections of this stream.

3. Process according to Claim 1 or Claim 2, in which the diameter of the thin stream is measured by means of a linear camera receiving the image of the stream, the operation of the camera being controlled so as to render the sequenced exposure time dependent on the average luminance of the thin stream of material.

4. Process according to Claim 3, in which the threshold of the signal used to determine the width of the stream is dependent on the maximum amplitude of the signal.

5. Device for determining the flow rate according to any one of the preceding claims, comprising two photodetectors disposed so as to receive the emission from the thin stream corresponding to two different points on the path of the flow of the stream, an assembly for amplifying the signal emitted by each of the photodetectors, and an assembly for processing the amplified signals and measuring the time separating the appearance of signals identified by the photodetectors, the device further comprising a linear camera for determining the diameter of the thin stream, means for processing the signals emitted by the photodetectors, means establishing correlations between the signal sequences emitted by the photodetectors and determining the time interval separating two correlated sequences.

6. Device according to Claim 5, in which the image of the thin stream is conveyed to the photodetectors by means of optical wave guides.

7. Device according to Claim 6, in which the optical wave guides have, at the material-stream image end, an elongate cross-section covering the entire cross-section of the thin stream.
